# EUROPEAN PATENT SPECIFICATION

(11) **EP 1 503 276 B1**
(45) Date of publication and mention of the grant of the patent: **17.10.2012**
(21) Application number: 04018165.3
(22) Date of filing: 30.07.2004
(51) Int. Cl.: G06F 3/033

(54) **Graphical user interface for system status alert on videoconference terminal**
Graphische Benutzerschnittstelle zur Systemzustandsalarmierung in einem Videokonferenz Terminal
Interface graphique utilisateur pour alerter sur l'état du système dans un terminal de vidéoconférence

(30) Priority: 31.07.2003 US 631668
(43) Date of publication of application: 02.02.2005
(73) Proprietor: POLYCOM, INC., Pleasanton, California 94588 (US)
(72) Inventor: Nelson, Keith B., Austin, TX 78750 (US); Ratcliff, Jeffry, Austin, TX 78731 (US); Sexton, Martin, Round Rock, TX 78664 (US); Nimri, Alain, Austin, TX 78750 (US)
(74) Representative: Käck, Jürgen

(56) References cited:
- US-A- 6 138 150

## Description

### BACKGROUND

### Field of the Invention.

This invention relates to videoconferencing systems. More particularly it relates to Graphical User Interfaces used to control the operation of a video conference terminal.

### Description of the Related Art.

Videoconferencing systems are relatively complex. They typically involve a plurality of video signals, audio signals, processors, apparatus and/or software for data compression and decompression, directional microphones, speakers, video display units, feedback-prevention circuits, cameras and connections to telecommunications networks with associated interface devices.

During a videoconference, a problem in the system may require the immediate attention of the user in order for the videoconference to proceed without interruption. In the past, a system malfunction might be signaled, but the user was required to troubleshoot the problem without specific guidance from the system. The number of subsystems typically present in a videoconferencing system leaves the user with a large number of status indicators to check in order to identify a malfunctioning component.

An example for a method for remotely controlling computer resources via the internet with a web browser is disclosed in US 6,138,150 A. In particular, a personal computer or workstation running a web browser point and click interface is used to display and send information for remotely controlling a computer such as a mainframe. In the preferred embodiment, a web site or "home page" is constructed on a secure HTTP server which comprises a Hardware Management Console (HMC). A user must logon to the internet in a conventional manner by entering the address or uniform resource locator (URL) to connect to the secure HTTP server. Upon entry of a correct password the HMC homepage will be displayed. Icons representing various mainframe computer components are displayed which link to additional pages which the user can click on to monitor and control the mainframe computer.

### SUMMARY OF THE INVENTION

The invention is defined in claims 1 and 12, respectively. Particular embodiments of the invention are set out in the dependent claims. In particular, an "Alert" tab or button is displayed on the Graphical User Interface (GUI) of a videoconference terminal when a problem occurs in the embedded system. Selecting the tab or button - e.g., with a pointing device - causes the display to switch to a diagnostic page which provides a specific indication of the problem which has occurred. In some embodiments, the diagnostic page may provide a graphical indication of the status of various subsystems.

### BRIEF DESCRIPTION OF THE DRAWINGS

Figure 1 is a block diagram of a video conference terminal for use in a videoconferencing system.

Figure 2 is the main page of a graphical user interface for a videoconferencing system with an "Alert" tab displayed.

Figure 3 is the system status page of a graphical user interface for a videoconferencing system showing a disconnected ISDN line.

Figure 4 is a "help" page.

Figure 5 shows an ISDN configuration page.

### DETAILED DESCRIPTION

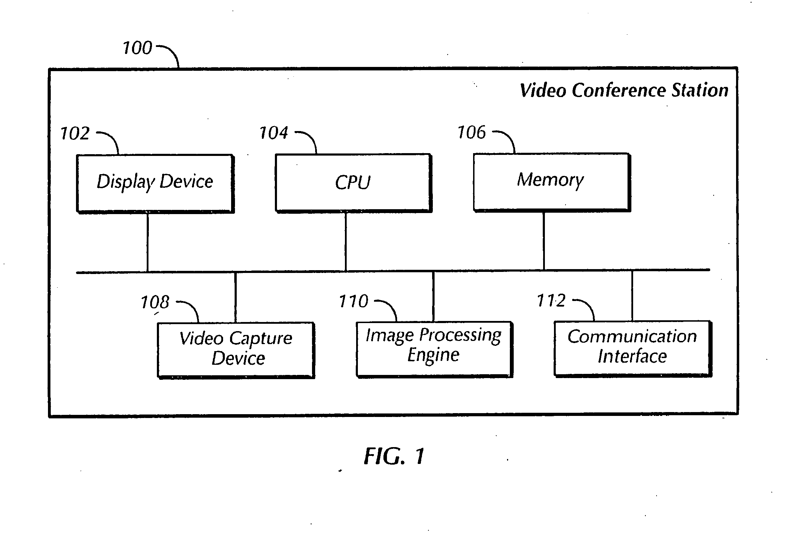

Figure 1 is a block diagram of an exemplary video conference station 100. For simplicity, the video conference station 100 will be described as the local video conference station, although the remote video conference station may contain a similar configuration. In one embodiment, the video conference station 100 includes a display device 102, a CPU 104, a memory 106, at least one video capture device 108, an image processing engine 110, and a communication interface 112. Alternatively, other devices may be provided in the video conference station 100, or not all above-named devices provided. The at least one video capture device 108 may be implemented as a charge couple device (CCD) camera, a complementary metal oxide semiconductor (CMOS) camera, or any other type of image capture device. The at least one video capture device 108 captures images of a user, conference room, or other scenes, and sends the images to the image processing engine 110. Typically, the image processing engine 110 processes the video image into data packets before the communication interface 112 transmits the data packets to the remote video conference station. Conversely, the image processing engine 110 also transforms received data packets from the remote video conference station into a video signal for display on the display device 102.

Videoconferencing systems may include an interface for a packet-switched network such as the IP network and/or an interface for a switched network such as the public telephone system. Due to the bandwidth required, a videoconference connection over the telephone system frequently involves one or more ISDN lines. ISDN PRI and ISDN BRI lines differ in the number of channels involved. The network interface may comprise a gatekeeper, time server, Global Address Book (GAB) server, and/or a Global management (GM) server. A gatekeeper functions as a call manager or multi-point control unit. If an IP connection is lost, all of the foregoing may be lost.

The type of problem which may cause a system status alert may be a "local problem" - i.e., a problem which prevents the near-end system from communicating with, for example, the ISDN card or the gatekeeper. When such a problem is detected by the system, the ALERT tab or button may be displayed on the MAIN screen. User selection of the ALERT tab or button with, for example, the local system's remote control, causes the local system to display the SYSTEM STATUS page on the system's display device which may be, for example, a television monitor.

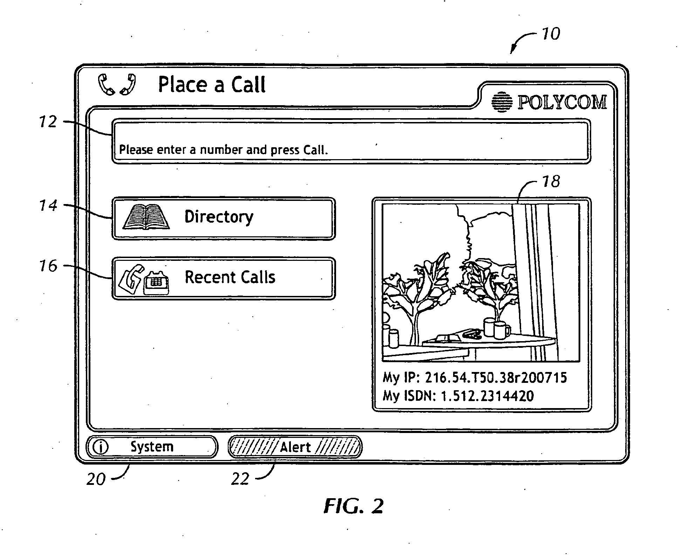

Figure 2 depicts an example of the MAIN page 10 of one particular videoconferencing system. The page includes data entry area 12 which may be used, for example, to enter the telephone number of a remote videoconferencing unit to be called. "Tab" or virtual "button" (hereinafter "tab") 14 may be selected by the user in order to display a telephone directory of remote videoconferencing systems. Tab 16 may be selected by the user to display a list of recently-made calls thereby winnowing the number of displayed phone numbers to those frequently used.

Selection of a tab may be made in any of the ways known in the art for selecting "hot areas" on a video display screen which acts an output device for a processor-based system. By way of example, a pointing device such as a mouse or light pen may be used. Touch screens are another suitable input selection means, as are infrared or radio-based remote control devices.

MAIN screen 10 also includes video window 18 which may display the video signal from either the "near" or "far" end of the videoconference. In the particular example illustrated in Figure 2, video window 18 contains a footer which displays the user's IP address and ISDN telephone line number.

Tab 20 is the SYSTEM tab which may be selected by the user to access certain administrative functions. In some embodiments, these administrative functions may be password protected.

Also shown in Figure 2 is ALERT tab 22 which may appear on MAIN screen 10 when a problem in the embedded system is detected. As shown in the example of Figure 2, ALERT tab 22 is highlighted (by, in the illustrated example, a change in the background color of the tab).

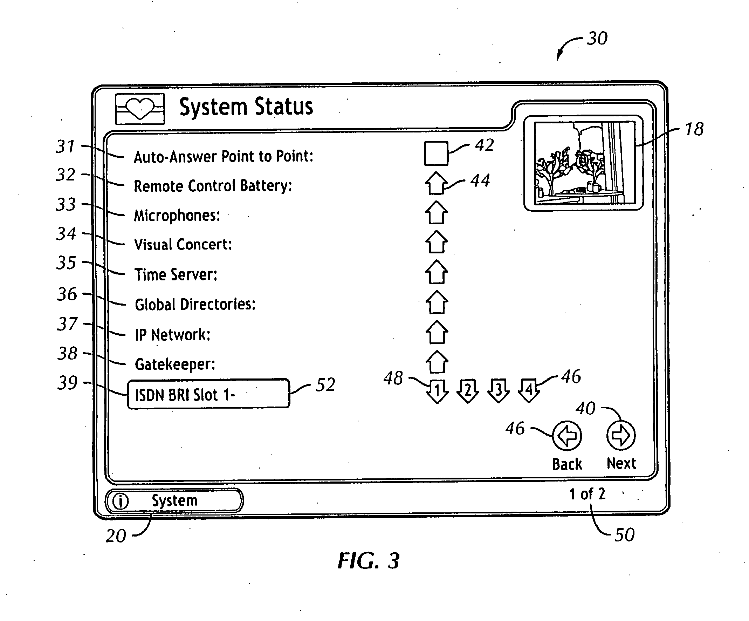

Selection of ALERT tab 22 by the user causes the display to change to a page which indicates the particular item(s) causing the fault condition. In the illustrated embodiment, the page used for this function is SYSTEM STATUS page 30. An example of a SYSTEM STATUS page is illustrated in Figure 3.

Various subsystems may be shown on the SYSTEM STATUS page such as: Auto-Answer Point to Point mode indicator 31; Remote Control Battery 32; Microphones 33; "Visual Concert" subsystem 34 which, in the particular embodiment illustrated, is used for notebook computer and projected displays; Timer Server 35; Global Directories availability 36; IP Network 37; Gatekeeper 38; and, ISDN BRI Slot 1. In some embodiments, the SYSTEM STATUS page may be available on the World Wide Web if the videoconference is using an IP connection. In this way, a remote diagnosis of a problem may be effected.

Associated with each displayed subsystem is a status indicator. For example Auto-Answer Point to Point mode 31 has associated indicator 42 which, in the illustrated example, is a rectangular status indicator which is indicative of a mode which does not affect the particular videoconference in progress - i.e., although not active or selected, the mode is not a system fault.

Subsystems 32 through 38, inclusive, have associated status indicators which are upwardly pointing arrows 44 in the illustrated example. An up arrow indicates a fully functional or "normal" state.

As seen in Figure 3, ISDN BRI Slot 1 indicator 39 has four associated downwardly pointing arrows 46 numbered 1 through 4. Down arrow 1 has flag color 48 which may be used to indicate a problem or fault on ISDN line number 1 - for example, the line may have been disconnected. The standard background color of lines 2 through 4 indicates that no particular problem has been detected, but the down arrow 46 indication may be used to show that these lines have not been selected for use in the particular videoconference being conducted.

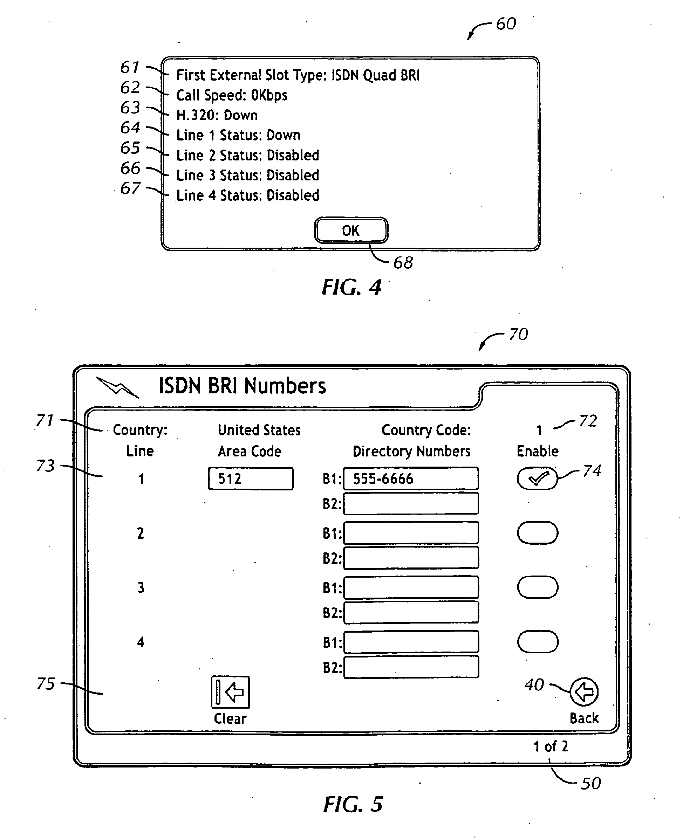

Subsystem indicator 39 is shown with highlight 52 which may be used to indicate selection by the user. In some embodiments, initial highlighting of a subsystem having a fault condition may be performed by the system. The user may defer to the system's selection or may choose to select a different subsystem for further information.
Activation of the selection may, in some embodiments, be used to access a "help" screen containing more detailed information on the particular subsystem selected. An example of a help screen for the ISDN BRI Slot 1 of a particular videoconferencing system is illustrated in Figure 4 as screen 60.

More detailed information on the selected subsystem may be made available on such a "help" screen. In the illustrated example, the display includes: interface identifier 61; data transmission rate indicator 62; protocol status indicator 63; line 1 status indicator 64; line 2 status indicator 65; line 3 status indicator 66; and, line 4 status indicator 67.

In the example illustrated in Figure 4, it can be seen that ISDN line 1 is down (63); lines 2,3, and 4 are disabled (64, 65, 66); no communications protocol is detected (63) (inasmuch as the only communications line is down); and the data rate is down to zero (62). The user may return to the previous screen by selecting the OK button 68.

Referring now to Figure 5, there is shown a representative example of ISDN line configuration screen 70. In some embodiments, this screen may be accessed by a CONFIG button or tab (not shown) on the "help" screen. The selected country is shown in country selection indicator 71 and the associated country code may be displayed in country code indicator field 72. Line 73 contains data entry fields for area codes and telephone numbers. Associated with each line is line selection indicator 74 which may be toggled by the user. In the embodiment shown in Figure 5, an enabled line is indicated with a check mark in the rightmost column on the screen. For the convenience of the user, all data entry fields may be cleared by selecting "clear" button 75.

## Claims

1. A method for alerting the user of a videoconference terminal (100) to a problem in the embedded system of the videoconference terminal (100) during a videoconference comprising:
displaying, in response to a detected malfunction in the embedded system of the videoconference terminal (100), a selectable indicator (22) on a graphical user interface (10) of the videoconference terminal (100);
displaying, in response to user selection of the selectable indicator (22), a list of subsystems (31-39) within the videoconference terminal (100); and
displaying in association with each displayed subsystem (31-39) an icon (42-48) indicative of the status of the subsystem.

2. A method as recited in claim 1 wherein an upwardly-pointing arrow (44) is used as an icon indicative of the status of a functioning subsystem.

3. A method as recited in claim 1 wherein a downwardly-pointing arrow (48) is used as an icon indicative of the status of a subsystem selected from the group consisting of malfunctioning subsystems, disconnected subsystems, non-responding subsystems, non-powered subsystems and unused subsystems.

4. A method as recited in claim 1 wherein a geometric shape (42) is used as an icon indicative of the status of a subsystem which is selected from the group consisting of unused subsystems, non-selected subsystems, non-essential subsystems, non-applicable subsystems, inactive subsystems and unnecessary subsystems.

5. A method as recited in claim 1 further comprising:
displaying, in response to user selection of a displayed subsystem (31-39), additional information concerning the status of the selected subsystem.

6. A method as recited in claim 5 wherein the additional information concerning the status of the selected subsystem is textual information (63).

7. A method as recited in claim 5 wherein the additional information concerning the status of the selected subsystem is numeric information (62).

8. A method as recited in claim 5 wherein the additional information concerning the status of the selected subsystem is displayed in graphical form.

9. A method as recited in claim 1 further comprising:
publishing on a website a list of subsystems (31-39) within the videoconference terminal (100) together with an icon indicative of the status of each subsystem.

10. A method as recited in claim 9 further comprising:
publishing a link to a web page containing additional information concerning a selected subsystem.

11. A method as recited in claim 10 wherein the link is a hypertext link.

12. A processor-based videoconference terminal, the videoconference terminal (100) being adapted to alert the user of the videoconference terminal (100) to a problem in the embedded system of the videoconference terminal (100) during a videoconference, the videoconference terminal (100) comprising a medium storing instructions for causing the processor (104) to:
display, in response to a detected malfunction in the embedded system of the videoconference terminal (100), a selectable indicator (22) on a graphical user interface (10) of the videoconference terminal (100);
display, in response to user selection of the selectable indicator (22), a list of subsystems (31-39) within the videoconference terminal (100); and
display in association with each displayed subsystem (31-39) an icon (42-48) indicative of the status of the subsystem.

13. A videoconference terminal as recited in claim 12 wherein the medium stores further instructions for causing the processor to:
display, in response to user selection of a displayed subsystem, additional information concerning the status of the selected subsystem.

## Patentansprüche

1. Verfahren zum Warnen des Benutzers eines Videokonferenzterminals (100) vor einem Problem im eingebetteten System des Videokonferenzterminals (100) während einer Videokonferenz, umfassend:
Anzeigen eines wählbaren Indikators (22) auf einer graphischen Benutzeroberfläche (10) des Videokonferenzterminals (100) als Reaktion auf eine festgestellte Fehlfunktion im eingebetteten System des Videokonferenzterminals (100),
Anzeigen einer Liste von Subsystemen (31-39) im Videokonferenzterminal (100) als Reaktion auf die Auswahl des wählbaren Indikators (22) durch den Benutzer, und
Anzeigen eines Symbols (42-48), das den Status des Subsystems angibt, in Verbindung mit jedem anzeigten Subsystem (31-39).

2. Verfahren nach Anspruch 1, wobei ein nach oben zeigender Pfeil (44) als ein Symbol verwendet wird, das den Status eines funktionierenden Subsystems angibt.

3. Verfahren nach Anspruch 1, wobei ein nach unten zeigender Pfeil (48) als ein Symbol verwendet wird, das den Status des Subsystems angibt, das aus der Gruppe bestehend aus fehlfunktionierenden Subsystemen, getrennten Subsystemen, nicht antwortenden Subsystemen, nicht mit Energie versorgten Subsystemen und nicht verwendeten Subsystemen ausgewählt wird.

4. Verfahren nach Anspruch 1, wobei eine geometrische Form (42) als ein Symbol verwendet wird, das den Status eines Subsystems angibt, das aus der Gruppe bestehend aus unbenutzten Subsystemen, nicht gewählten Subsystemen, nicht wesentlichen Subsystemen, nicht anwendbaren Subsystemen, inaktiven Subsystemen und unnötigen Subsystemen ausgewählt wird.

5. Verfahren nach Anspruch 1, ferner umfassend:
Anzeigen zusätzlicher Information betreffend den Status des gewählten Subsystems als Reaktion auf die Auswahl eines angezeigten Subsystems (31-39) durch den Benutzer.

6. Verfahren nach Anspruch 5, wobei die zusätzliche Information betreffend den Status des ausgewählten Subsystems Textinformation (63) darstellt.

7. Verfahren nach Anspruch 5, wobei die zusätzliche Information betreffend den Status des ausgewählten Subsystems numerische Information (62) darstellt.

8. Verfahren nach Anspruch 5, wobei die zusätzliche Information betreffend den Status des ausgewählten Subsystems in graphischer Form angezeigt wird.

9. Verfahren nach Anspruch 1, ferner umfassend:
Veröffentlichen einer Liste von Subsystemen (31-39) im Videokonferenzterminal (100) auf einer Webseite zusammen mit einem Symbol, das den Status jedes Subsystems angibt.

10. Verfahren nach Anspruch 9, ferner umfassend:
Veröffentlichen eines Links zu einer Webseite, die zusätzliche Information bezüglich eines gewählten Subsystems enthält.

11. Verfahren nach Anspruch 10, wobei der Link ein Hypertext-Link ist.

12. Prozessor-basiertes Videokonferenzterminal, wobei das Videokonferenzterminal (100) dazu ausgebildet ist, den Benutzer des Videokonferenzterminals (100) vor einem Problem im eingebetteten System des Videokonferenzterminals (100) während einer Videokonferenz zu warnen, wobei das Videokonferenzterminal (100) ein Medium zum Speichern von Anweisungen umfasst, um den Prozessor (104) zu veranlassen:
einen wählbaren Indikator (22) auf einer graphischen Benutzeroberfläche (10) des Videokonferenzterminals (100) als Reaktion auf eine festgestellte Fehlfunktion im eingebetteten System des Videokonferenzterminal (100) anzuzeigen,
eine Liste von Subsystemen (31-39) im Videokonferenzterminal (100) als Reaktion auf die Auswahl des wählbaren Indikators (22) durch den Benutzer anzuzeigen, und
ein Symbol (42-48), das den Status des Subsystems angibt, in Verbindung mit jedem anzeigten Subsystem (31-39) anzuzeigen.

13. Videokonferenzterminal nach Anspruch 12, wobei das Medium weitere Anweisungen speichert, um den Prozessor zu veranlassen:
zusätzliche Information betreffend den Status des gewählten Subsystems als Reaktion auf die Auswahl eines angezeigten Subsystems (31-39) durch den Benutzer anzuzeigen.

## Revendications

1. Procédé d'alerte de l'utilisateur d'un terminal de vidéoconférence (100) par rapport à un problème dans le système intégré du terminal de vidéoconférence (100) au cours d'une vidéoconférence comprenant :
un affichage, en réponse à un dysfonctionnement détecté dans le système intégré du terminal de vidéoconférence (100), d'un indicateur pouvant être sélectionné (22) sur une interface utilisateur graphique (10) du terminal de vidéoconférence (100) ;
un affichage, en réponse à une sélection d'utilisateur de l'indicateur pouvant être sélectionné (22), d'une liste de sous-systèmes (31 à 39) au sein du terminal de vidéoconférence (100) ; et
un affichage en association avec chaque sous-système affiché (31 à 39) d'une icône (42 à 48) indiquant l'état du sous-système.

2. Procédé selon la revendication 1, dans lequel une flèche pointant vers le haut (44) est utilisée en tant qu'icône indiquant l'état d'un sous-système en fonctionnement.

3. Procédé selon la revendication 1, dans lequel une flèche pointant vers le bas (48) est utilisée en tant qu'icône indiquant l'état d'un sous-système sélectionné à partir du groupe constitué de sous-systèmes en dysfonctionnement, de sous-systèmes déconnectés, de sous-systèmes ne répondant pas, de sous-systèmes non alimentés et de sous-systèmes inutilisés.

4. Procédé selon la revendication 1, dans lequel une forme géométrique (42) est utilisée en tant qu'icône indiquant l'état d'un sous-système qui est sélectionné à partir du groupe constitué de sous-systèmes inutilisés, de sous-systèmes non sélectionnés, de sous-systèmes non essentiels, de sous-systèmes non applicables, de sous-systèmes inactifs et de sous-systèmes non nécessaires.

5. Procédé selon la revendication 1, comprenant en outre :
un affichage, en réponse à une sélection d'utilisateur d'un sous-système affiché (31 à 39), d'informations supplémentaires concernant l'état du sous-système sélectionné.

6. Procédé selon la revendication 5, dans lequel les informations supplémentaires concernant l'état du sous-système sélectionné sont des informations textuelles (63).

7. Procédé selon la revendication 5, dans lequel les informations supplémentaires concernant l'état du sous-système sélectionné sont des informations numériques (62).

8. Procédé selon la revendication 5, dans lequel les informations supplémentaires concernant l'état du sous-système sélectionné sont affichées sous une forme graphique.

9. Procédé selon la revendication 1, comprenant en outre :
une publication sur un site Web d'une liste de sous-systèmes (31 à 39) au sein du terminal de vidéoconférence (100) en même temps qu'une icône indiquant l'état de chaque sous-système.

10. Procédé selon la revendication 9, comprenant en outre :
une publication d'un lien vers une page Web contenant des informations supplémentaires concernant un sous-système sélectionné.

11. Procédé selon la revendication 10, dans lequel le lien est un lien hypertexte.

12. Terminal de vidéoconférence basé sur un processeur, le terminal de vidéoconférence (100) étant conçu pour alerter l'utilisateur du terminal de vidéoconférence (100) d'un problème dans le système intégré du terminal de vidéoconférence (100) au cours d'une vidéoconférence, le terminal de vidéoconférence (100) comprenant un support mémorisant des instructions destinées à amener le processeur (104) à :
afficher, en réponse à un dysfonctionnement détecté dans le système intégré du terminal de vidéoconférence (100), un indicateur pouvant être sélectionné (22) sur une interface utilisateur graphique (10) du terminal de vidéoconférence (100) ;
afficher, en réponse à une sélection d'utilisateur de l'indicateur pouvant être sélectionné (22), une liste de sous-systèmes (31 à 39) au sein du terminal de vidéoconférence (100) ; et
afficher en association avec chaque sous-système affiché (31 à 39) une icône (42 à 48) indiquant l'état du sous-système.

13. Terminal de vidéoconférence selon la revendication 12, dans lequel le support mémorise d'autres instructions destinées à amener le processeur à :
afficher, en réponse à une sélection d'utilisateur d'un sous-système affiché, des informations supplémentaires concernant l'état du sous-système sélectionné.
